# EUROPÄISCHE PATENTSCHRIFT

(11) **EP 0 544 135 B1**
(45) Veröffentlichungstag und Bekanntmachung des Hinweises auf die Patenterteilung: **18.12.1996**
(21) Anmeldenummer: 92119012.0
(22) Anmeldetag: 06.11.1992
(51) Int. Cl.: E05F 15/10, H02P 7/00, G05B 19/23

(54) **Verfahren und Vorrichtung zur Steuerung der Endlagen von durch Elektromotore angetriebenen Stellantrieben**
Method and device for the control of the end positions of electric motor driven actuators
Procédé et dispositif de commande de position fin de course d'un servomécanisme entraîné par moteur électrique

(30) Priorität: 23.11.1991 DE 9114598 U
(43) Veröffentlichungstag der Anmeldung: 02.06.1993
(73) Patentinhaber: Gretsch-Unitas GmbH Baubeschläge, D-71252 Ditzingen (DE)
(72) Erfinder: Renz, Walter, Dipl.-Ing. (FH), W-7257 Ditzingen (DE); Münch, Gerhard, W-7145 Markgröningen (DE)
(74) Vertreter: KOHLER SCHMID + PARTNER

(56) Entgegenhaltungen:
- EP-A- 0 422 711
- EP-A- 0 426 577
- EP-A- 0 498 234
- DE-A- 3 527 906
- US-A- 3 585 376
- US-A- 4 638 433
- IBM TECHNICAL DISCLOSURE BULLETIN. Bd. 21, Nr. 3 , August 1978 , NEW YORK US Seiten 913 - 914 J. B. SLOAN AND S, S. SPIRA 'Computerized manipulator position sensing'

## Beschreibung

Die Erfindung betrifft ein Verfahren und eine Vorrichtung zur Steuerung der Endlagen von durch Elektromotoren angetriebenen Stellantrieben, insbesondere an Fenstern, Türen, Markisen, Rolladen od. dgl., wobei vom Motor gesteuerte Impulse in jeder Drehrichtung gezählt und mit insbesondere einstellbaren Endwerten für die Endanschläge in beiden Richtungen verglichen werden und bei Erreichen des jeweiligen Endwertes eine Abschaltung des Motors mindestens in der dem Endwert entsprechenden Drehrichtung vorgenommen wird und wobei zur Endlageneinstellung ein Schalter für eine Speichervorrichtung manuell eingeschaltet und der Motor wenigstens in Schließrichtung bis zum Anschlag gefahren wird.

Solche elektromotorisch angetriebenen Stellantriebe werden manuell oder automatisch z.B. durch einen Licht-, Feuchte- oder Temperaturfühler eingeschaltet und bewegen dann einen Fensterflügel oder Türflügel bzw. eine Markise oder einen Rolladen bis zu einer Endlage in einer gewünschten Richtung. Das Erreichen der Endlage wird üblicherweise automatisch erkannt und daraufhin der Stellantriebsmotor zumindest für die momentane Drehrichtung abgeschaltet. Solche Endabschaltvorrichtungen können beispielsweise rein mechanisch oder elektromechanisch ausgeführt werden.

Bei einer üblichen Form elektromechanisch ausgeführter Endabschalter werden von einer mit der Motorwelle synchron bewegten Schaltnase Mikroschalter betätigt, die so angebracht sind, daß der Zeitpunkt ihres Abschaltens der jeweiligen Endlage des gestellten Objekts entspricht. Für die Justage des genannten Schaltzeitpunktes muß die mechanische Stellung der Mikroschalter bzw. ihres Schaltorgans sehr genau einstellbar sein. Diese Einstellung der Position der Mikroschalter bzw. ihres Schaltorgans läßt sich aber ohne übergroßen Aufwand nicht so präzise wie gewünscht vornehmen. Ferner können Mikroschalter fertigungsbedingt variierende Schaltcharakteristika haben. Außerdem kann sich die einmal für die Endabschaltung eingestellte Position der Mikroschalter bzw. ihres Schaltorgans aufgrund von Erwärmungen im Gehäuse des Stellantriebsmotors verändern. Alle diese Einflüsse wirken sich nachteilig auf die Positionsgenauigkeit der Endabschaltung aus, so daß es vorkommen kann, daß der Stellantriebsmotor zu früh abschaltet oder auch noch läuft, wenn die jeweilige Endlage des angetriebenen Objektes bereits erreicht ist. Dabei kann es zur Beschädigung oder Zerstörung des Motors kommen.

Ein gattungsgemäßes Verfahren sowie eine gattungsgemäße Vorrichtung sind aus der EP-A-0 426 577 bekannt. Bei dem Verfahren nach dieser Vorveröffentlichung sind zur Einstellung der Endlagen eines Verdunkelungselements zunächst zwei Tasten zu drücken, um dadurch einen Speichermodus zu aktivieren. Anschließend muß das Verdunkelungselement durch Betätigen des ersten Tasters in seine obere Endstellung oder durch Betätigen des zweiten Tasters in seine untere Endstellung verfahren werden. Nachdem das Verdunkelungselement seine jeweilige Endlage erreicht hat, ist der betreffende Taster freizugeben. Anschließend können die Endlagen durch Drücken eines dritten Tasters und anschließendes Drücken des ersten Tasters (für die obere Endstellung) oder des zweiten Tasters (für die untere Endlage) in einen Speicher geladen werden. Nachteiligerweise ist die Endlageneinstellung nach dem bekannten Verfahren bzw. an der bekannten Vorrichtung verhältnismäßig umständlich.

Es ist deshalb Aufgabe der Erfindung, gattungsgemäße Verfahren sowie gattungsgemäße Vorrichtungen dahingehend weiterzubilden, daß die Justage der Endlagenabschaltung vereinfacht wird.

Die obige Aufgabe wird bei einem erfindungsgemäßen Verfahren durch die im Anspruch 1 angegebenen kennzeichnenden Merkmale gelöst. Ferner wird die obige Aufgabe bei einer erfindungsgemäßen Vorrichtung durch die kennzeichnenden Merkmale von Anspruch 3 gelöst. Die Erfindung geht dabei von dem Prinzip aus, eine jeweilige End7agenste77ung nicht mechanisch, sondern elektrisch durch Zählen von abhängig von der Motorumdrehung erzeugten Impulsen in jeder Drehrichtung und durch Vergleich der erfaßten Anzahl der so erzeugten Impulse mit einem jeweils vorgegebenen Grenzwert zu erfassen und dann den Motor mindestens in der dem Endwert entsprechenden Drehrichtung abzuschalten. Der Hauptvorteil dieses Verfahrens besteht darin, daß die Positionen der Endlagenabschaltung des Stellantriebsmotors von mechanischen Unsicherheiten, wie Fertigungstoleranzen, Justferfehlern und erwärmungsbedingten Veränderungen unabhängig sind. Die jeweiligen Grenzwerte können in verschiedener Weise vorgegeben werden, in analoger oder bevorzugt in digitaler Form, beispielsweise durch eine äußere Verdrahtung von Mehrbitvergleichern, die jeweils den gezählten Wert in der jeweiligen Motordrehrichtung mit den auf diese Weise festgelegten digitalen Grenzwertinformationen vergleichen. Erfindungsgemäß werden jedoch die jeweiligen digitalen Grenzwertinformationen in einen permanenten Speicher geladen. Zur erstmaligen Einstellung, das heißt Justage der digitalen Grenzwertinformation wird so vorgegangen, daß, wie bekannt, ein Schalter für die Speichervorrichtung manuell eingeschaltet und der Motor wenigstens in Schließrichtung bis zum Anschlag gefahren wird. Erfindungsgemäß schaltet sich der bis zum Anschlag gefahrene Motor dabei aufgrund einer Lastabschaltvorrichtung selbsttätig ab, wobei dann der aufgrund einer Wegmessung festgestellte Endwert selbsttätig in einen permanenten Speicher geladen wird. Auf die gleiche Art und Weise kann die Endlageneinstellung auch in der umgekehrten Drehrichtung erfolgen.

Eine vorteilhafte Weiterbildung des Verfahrens sieht vor, daß die gezählten Werte einer Anzeigevorrichtung für die Stellung des Stellantriebs zugeführt werden. Dadurch erhält der Betreiber oder eine Wartungsperson eine Information über den jeweils vorhandenen Zählerstand und darüber, ob die jeweilige Endlage erfaßt wurde. Eine solche Anzeigevorrichtung wird bevorzugt einfach und billig mittels Leuchtdioden (LEDs) ausgeführt. Durch die LED-Anzeige kann die Einstellaktion visuell kontrolliert werden.

Die erfindungsgemäße Vorrichtung zeichnet sich dadurch aus, daß je ein Sensor für die Lastabschaltung des Elektromotors in jeder Drehrichtung vorgesehen und mit einem zugeordneten Permanentspeicher für den Grenzwert in der jeweiligen Drehrichtung verbunden ist, wobei bei Lastabschaltung der erreichte Endlagenwert selbsttätig in den zugeordneten Permanentspeicher eingespeichert wird.

Vorzugsweise ist ein Mikrocomputer vorgesehen, wobei einige oder alle Steuerelemente als Programmteile ausgebildet sind und der Computer somit Steuerfunktionen übernimmt.

Diese Merkmale und Vorteile der Erfindung werden nachfolgend anhand der Zeichnungsfiguren näher beschrieben. Es zeigen:
- Fig. 1: ein Funktionsblockschaltbild einer Vorrichtung zür Endlagensteuerung;
- Fig. 2: ein Funktionsschaltbild einer erfindungsgemäßen Vorrichtung für die Endlageneinstellung und Grenzwerteinspeicherung.

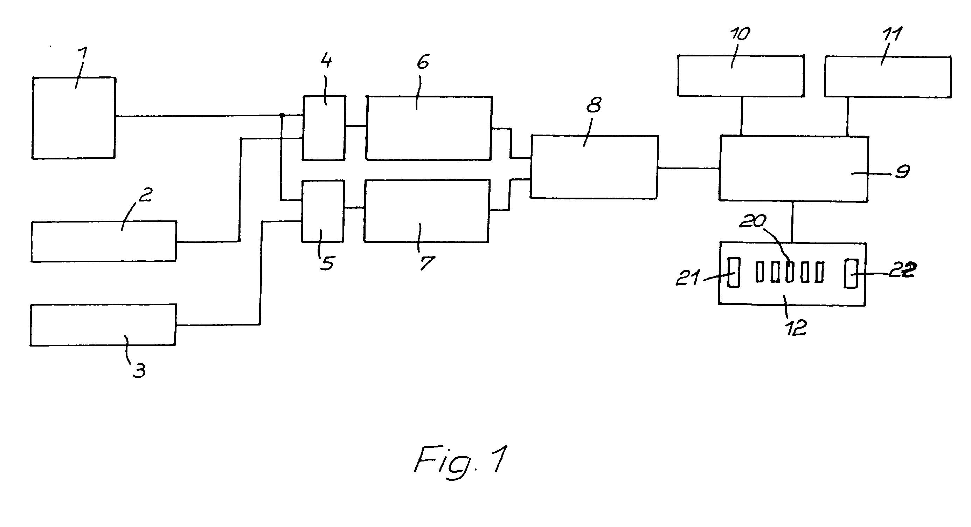

In Fig. 1 werden von einem Impulsgeber 1 Zählimpulse zusammen mit von Sensoren 2, 3 erzeugten Drehrichtungsinformationen zwei UND-Gliedern 4 und 5 zugeführt. Die UND-Glieder 4 und 5 sind ihrerseits mit Stellwerken 6 und 7 verbunden, wobei das Stellwerk 6 vorwärts und das Stellwerk 7 rückwärts zählen. Die Werte dieser beiden Stellwerke 6 und 7 werden einem Vorwärts- und Rückwärts-Zählwerk 8 zugeführt, wobei der Ausgangswert dieses Zählwerkes der jeweiligen Position des Stellantriebes entspricht. Der Wert dieses Vorwärts- und Rückwärts-Zählwerks 8 wird in einer Vergleichsvorrichtung 9 mit den jeweiligen in einen Permanentspeicher derselben eingegebenen Grenzwerten verglichen. Sind die Grenzwerte erreicht, so werden Impulse an eine Ausschaltvorrichtung 10 für die Einwärts- bzw. eine Ausschaltvorrichtung 11 für die Auswärtsposition geleitet. Die Vergleichsvorrichtung 9 ist außerdem mit einer LED-Anzeige 12 verbunden. Diese besteht im Ausführungsbeispiel aus sieben LED's, von denen fünf innenliegende Leuchtdioden 20 zur Anzeige der Position und links und rechts davon je eine Leuchtdiode 21, 22 zur Anzeige der erreichten Endlage dienen. Die Farben der Dioden zur Positionsanzeige können unterschiedlich zu denen der Endlageanzeige sein. Solange der gezählte Positionswert innerhalb der beiden Endlagengrenzwerte liegt, wird der Zählwert im Verhältnis zum gesamtmöglichen Weg durch die fünf innenliegenden LED's in fünf Schritten angezeigt. Wird eine Endlage erreicht, leuchtet auf der entsprechenden Seite eine der außenliegenden LED's auf. Die Positionsanzeige erlischt dann.

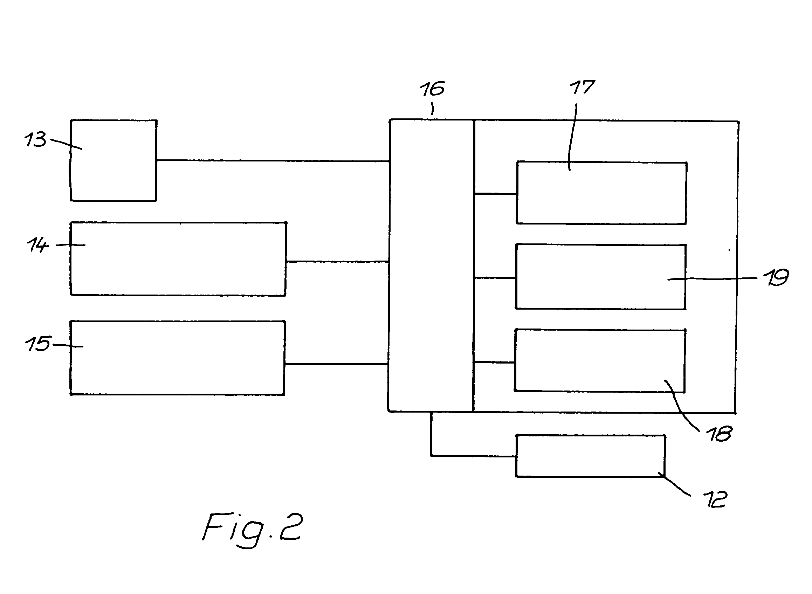

Fig. 2 zeigt eine erfindungsgemäßen Vorrichtung, welche vor allem zum Einspeichern der Endlagenwerte dient. Die Vorrichtung weist einen manuellen Einschalter, insbesondere Druckknopf 13, eine Abschaltvorrichtung 14 für die eine Endlage und einen Abschalter 15 für die andere Endlage auf. Außerdem ist eine Auswertevorrichtung 16 vorgesehen, welche einen Permanentspeicher 17 für den einen Grenzwert und einen Permanentspeicher 18 für den anderen Grenzwert sowie einen Speicher 19 für den Istwert enthält. Die Endlageneinstellung wird wie folgt vorgenommen:

Der Einschaltdruckknopf 13 wird betätigt. Daraufhin geht die Vorrichtung in den Einstellmodus. Dies wird durch abwechselndes Blinken von zwei Leuchtdioden der LED-Anzeige 12 angezeigt. Der Antrieb wird nunmehr gegen den einen Anschlag, insbesondere in die geschlossene Stellung des Stellantriebes gefahren. Bei Ansprechen der entsprechenden Lastabschaltvorrichtung 14 oder 15 wird der erreichte Endlagenwert in einen der Permanentspeicher 17, 18 eingespeichert. Zur Anzeige, daß der erste Endlagenwert eingestellt ist, blinkt nunmehr nur noch eine Leuchtdiode der Anzeigevorrichtung 12. Nun wird der Antriebsmotor in die entgegengesetzte Richtung gefahren und die zweite Endlage erreicht, wodurch die andere Lastabschaltung 14, 15 anspricht. Daraufhin wird dann der zweite Endlagengrenzwert in den jeweils anderen Permanentspeicher 17, 18 eingespeichert. Die Blinkanzeige der Leuchtdiode in der Anzeigevorrichtung 12 erlischt nun vollständig.

Man kann die Grenzwerte jedoch auch ohne Ausnutzung der Lastabschaltvorrichtungen 14 und 15 in einer der beiden Richtungen von Hand einstellen. Hierzu wird der Antrieb bis zur gewünschten Endposition gefahren und dann nochmals der Druckknopf 13 betätigt. Daraufhin wird dann der Wert für den jeweiligen Grenzwert entsprechend gespeichert. Die Speicherung in Permanentspeichern ist von grundsätzlicher Bedeutung, damit die Grenzwerte bei einem Netzausfall wiederum zur Verfügung stehen.

Die erfindungsgemäße Vorrichtung kann auch über eine serielle Schnittstelle an eine Zentralsteuerung angeschlossen werden. Die Werte des Motors wie: OFFEN-Stellung, ZU-Stellung, Einschaltzustand, Laufzeit usw. können dann zentral abgefragt werden. Die Steuerung kann übergeordnet von einer Zentrale erfolgen, wobei dann z.B. bei Steuerung über die Zentrale die Einzelsteuerung abgeschaltet wird.

## Patentansprüche

1. Verfahren zur Steuerung der Endlagen von durch Elektromotoren angetriebenen Stellantrieben insbesondere an Fenstern, Türen, Markisen, Rolladen od. dgl., wobei vom Motor gesteuerte Impulse in jeder Drehrichtung gezählt und mit insbesondere einstellbaren Endwerten für die Endanschläge in beiden Richtungen verglichen werden und bei Erreichen des jeweiligen Endwertes eine Abschaltung des Motors mindestens in der dem Endwert entsprechenden Drehrichtung vorgenommen wird und wobei zur Endlageneinstellung ein Schalter für eine Speichervorrichtung manuell eingeschaltet und der Motor wenigstens in Schließrichtung bis zum Anschlag gefahren wird, dadurch gekennzeichnet, daß sich der bis zum Anschlag gefahrene Motor aufgrund einer Lastabschaltvorrichtung selbsttätig abschaltet, wobei dann der aufgrund einer Wegmessung festgestellte Endwert selbsttätig in einen permanenten Speicher geladen wird.

2. Verfahren nach Anspruch 1, dadurch gekennzeichnet, daß die gezählten Werte einer Anzeigevorrichtung für die Stellung des Stellantriebes zugeführt werden.

3. Vorrichtung zur Steuerung der Endlagen von Markisen, Rolladen od. dgl. an Fenstern oder Türen gemäß dem Verfahren nach Anspruch 1 oder 2 mit einem durch einen Elektromotor angetriebenen Stellantrieb sowie mit einem Schalter (13) als manueller Einschaltvorrichtung für eine Auswertevorrichtung (16) für die Endlagen, je einem in der Auswertevorrichtung (16) enthaltenen Permanentspeicher (17, 18) für die Grenzwerte in beiden Drehrichtungen und einem Istwertspeicher (19), dadurch gekennzeichnet, daß je ein Sensor (14, 15) für die Lastabschaltung des Elektromotors in jeder Drehrichtung vorgesehen und mit einem zugeordneten Permanentspeicher (17, 18) für den Grenzwert in der jeweiligen Drehrichtung verbunden ist, wobei bei Lastabschaltung der erreichte Endlagenwert selbsttätig in den zugeordneten Permanentspeicher (17, 18) eingespeichert wird.

4. Vorrichtung nach Anspruch 3, dadurch gekennzeichnet, daß eine LED-Anzeigevorrichtung (12) mit mindestens je einem LED für die beiden Drehrichtungen vorgesehen ist.

5. Vorrichtung nach Anspruch 3 oder 4, gekennzeichnet durch die Anordnung eines Mikrocomputers, wobei mindestens einige der Steuerelemente als Programmteile ausgebildet sind und der Computer damit Steuerfunktionen übernimmt.

## Claims

1. Process for controlling the end positions of electrical motor driven actuating devices, in particular on windows, doors, sun blinds, roller blinds or similar, wherein pulses controlled by the motor are counted in each direction of rotation and compared with, in particular, settable end values for the end abutments in both directions, and, when the end value is achieved in each case, a switching off of the motor at least in the direction of rotation corresponding to the end value is performed, and wherein, for the setting of the end position, a switch for a memory device is switched on manually and the motor is driven in a closing direction to abutment, characterised in that the motor which is driven to abutment switches off automatically by reason of a device for switching off load, wherein the end value which is established on the basis of a distance measurement is then automatically entered into a permanent memory.

2. Process according to Claim 1, characterised in that the counted values are conducted to a display device for the setting of the actuator.

3. A device for the control of the end positions of sun blinds, roller blinds, or similar, on windows or doors according to the process according to Claim 1 or Claim 2 with an actuator driven by an electric motor and a switch (13) in the form of a manual switching-on device for an evaluation device (16) for the end positions, a permanent memory (17, 18) contained in the evaluation device (16) in each case, for limit values in both directions of rotation, and an actual value memory (19), characterised in that a sensor (14, 15) is provided for switching off the load of the electric motor in each direction of rotation in each case, and is connected to an associated permanent memory (17, 18) for the limit value in the direction of rotation in each case, wherein, when the load is switched off, the end position value which has been achieved is automatically stored in the associated permanent memory (17, 18).

4. Device according to Claim 3, characterised in that an LED display device (12) with at least one LED is provided for each of the two directions of rotation.

5. Device according to Claim 3 or Claim 4, characterised by the arrangement of a microcomputer, wherein at least some of the control elements are formed as program parts and the computer thus takes over control functions.

## Revendications

1. Procédé de commande des positions de fin de course de servomécanismes entraînés par des moteurs électriques, notamment sur des fenêtres, des portes, des stores, des volets roulants ou analogues, des impulsions déclenchées par le moteur étant comptées dans chaque direction de rotation et comparées à des valeurs de fin de course, notamment réglables, pour les butées de fin de course dans les deux directions, et, à l'atteinte de la valeur respective de fin de course, une déconnexion du moteur étant entreprise au moins dans la direction de rotation correspondant à la valeur de fin de course, et, pour le réglage des positions de fin de course, un commutateur pour un dispositif de mémorisation étant enclenché manuellement et le moteur étant manoeuvré jusqu'à la butée au moins dans la direction de fermeture, **caractérisé** en ce que le moteur manoeuvré jusqu'à la butée se déconnecte automatiquement sur la base d'un dispositif de déconnexion en fonction de la charge, la valeur de fin de course déterminée sur la base d'une mesure de déplacement étant alors chargée automatiquement dans une mémoire permanente.

2. Procédé selon la revendication 1, **caractérisé** en ce que les valeurs comptées sont transmises à un dispositif d'affichage de la position du servomécanisme.

3. Dispositif de commande des positions de fin de course de stores, volets roulants ou analogues sur des fenêtres ou des portes, d'après le procédé selon la revendication 1 ou 2, avec un servomécanisme entraîné par un moteur électrique ainsi qu'avec un commutateur (13) comme dispositif d'enclenchement manuel pour un dispositif (16) d'évaluation des postions de fin de course, avec une mémoire permanente respective (17, 18), contenue dans le dispositif d'évaluation (16), pour les valeurs limites dans les deux directions de rotation, et avec une mémoire (19) de valeur effective, **caractérisé** en ce qu'un capteur respectif (14, 15) est prévu pour la déconnexion en fonction de la charge du moteur électrique dans chaque direction de rotation, et est relié à une mémoire permanente associée (17, 18) pour la valeur limite dans la direction respective de rotation, la valeur atteinte de position de fin de course lors de la déconnexion en fonction de la charge étant automatiquement mémorisée dans la mémoire permanente associée (17, 18).

4. Dispositif selon la revendication 3, **caractérisé** en ce qu'est prévu un dispositif d'affichage (12) à diodes électroluminescentes, avec au moins une diode électroluminescente respective pour les deux directions de rotation.

5. Dispositif selon la revendication 3 ou 4, **caractérisé** par l'installation d'un micro-ordinateur, au moins quelques-uns des éléments de commande étant réalisés sous la forme de parties de programme, et l'ordinateur assumant ainsi des fonctions de commande.
